# EUROPEAN PATENT SPECIFICATION

(11) **EP 2 288 058 B1**
(45) Date of publication and mention of the grant of the patent: **23.05.2012**
(21) Application number: 09168391.2
(22) Date of filing: 21.08.2009
(51) Int. Cl.: H04J 3/06, H04L 12/42

(54) **System and method for detection of multiple timing masters in a network**
System und Verfahren zur Erkennung von mehreren Timingmastern in einem Netzwerk
Système et procédé pour la détection de plusieurs maîtres de synchronisation dans un réseau

(43) Date of publication of application: 23.02.2011
(73) Proprietor: SMSC Europe GmbH, 76185 Karlsruhe (DE)
(72) Inventor: Green, Christopher, Austin, 78731 (US); Becker, Claudius, 76698, Ubstadt-Weiher (DE); Ching, Eric Matthew, Austin, TX 78729 (US)
(74) Representative: Lohr, Georg

(56) References cited:
- EP-A1- 2 045 937
- WO-A1-96/37985
- WO-A1-2005/119951

## Description

### Field of the invention

The invention relates to a communication system, ports of the communication system and a method for managing a communication system, preferably to a synchronous communication system formed as a ring network of two or more ports coupled in daisy chain fashion to one an-other to allow communication.

### Description of the related art

A communication system is generally known as a system that permits communication between nodes interconnected by a transmission line. Each node can transmit information and receive information across the transmission line. The communication system of interconnected nodes can be organized in various topologies, such as bus, ring, star, or tree topology or a combination thereof.

A bus topology network is generally regarded as linear. Transmissions from one node propagate along the transmission line and are received by all other nodes connected to that bus. A ring topology network, however, generally consists of a series of nodes connected to one another by unidirectional transmission links to form a single, closed loop. Examples of a ring network are described in IEEE 802.5 and Fiber Distributed Data Interface (FDDI).

The transmission line between nodes can be either wired or wireless, for example, copper wire, fiber optic, or wireless transmission medium for the chosen transmission line, respectively.

A communication system, for real-time applications or for transferring synchronous streaming data must have a low latency and a low transmission overhead. In addition it is often necessary to synchronize clocks between nodes and to further provide a time reference for all nodes.

US 5,907,685 discloses a method of time synchronization between network nodes based on extensive bidirectional communication. Such a bidirectional communication causes a significant load on the network, when done regularly in short intervals. Furthermore there is significant computing power required to evaluate the communicated data. For timing synchronization a lead computer distributes the timing information. For this purpose, the role of the lead computer must be assigned to a specific computer in the network. In most networks, computers are attached to the network or removed from the network. Accordingly, it may be possible that there are two or even more lead computers distributing timing information. No method is disclosed for identifying multiple lead computers in the network.

EP 2045937 A1 discloses a method for transmitting time information over a synchronous network.

WO 96/37985 discloses a general ring bus system.

### Summary of the invention

The problem to be solved by the invention is to distribute a common real-time clock over a network having a ring topology to a plurality of network nodes with minimal time variations between the individual nodes. An object of the invention is to ensure that there is only one timing reference in a network. The requirements of memory and processing power should be small.

Solutions of the problem are described in the independent claims. The dependent claims relate to further improvements of the invention.

The invention comprises a first network node being connected to the ring network and further being configured to transmit timing information over the net-work. This node is the timing reference for the network clock being used to transfer data over the network. It furthermore transmits data fields containing unique timing information. When this first network node transmits at least one frame of data having timing information by a transmit port, it receives the same data by it's receive port being delayed for the propagation time around the ring network. It is essential that the overall time delay for data traveling around the ring bus is shorter than the length of a frame of data. This ensures that the first network node acting as a timing master can receive at least parts of the same frame it is just transmitting. To check for other timing masters, this first network node now can compare the timing information received by the receive port with the timing information which has been sent by the transmit port. If the timing information transmitted is identical to the timing information received, there is no other timing master in the network. For the case there would be at least a second timing master on the network, the second timing master would overwrite the timing information with its own timing information before forwarding the received frame on the network. There is a high probability that the timing information of the second timing master is different from the timing information of the first timing master. Accordingly, the first bus node will receive different timing information as is has transmitted. In this case, the first bus node now knows that there is at least another timing master on the network, transmitting timing information. As a consequence, an arbitration mechanism can be triggered to resolve this timing master conflict.

This method can be continuously applied to every data frame being transmitted by the timing master. Accordingly, it is possible to identify recently inserted bus nodes taking over the function of the timing master.

For the case the overall delay of frames over the network is larger than the time of a network frame, the sizes of network frames should be adapted accordingly. For the above-mentioned method it is necessary that the first network node acting as timing master can receive at least parts of the same frame it just has been transmitting to verify that it is the same frame. If there would be a significant time delay in frames being transmitted over the network, the first bus node cannot ensure that a frame being just received is a frame which has been transmitted by itself.

This method has the advantage that it requires no additional information about the function of the network node acting as timing master and therefore no additional space in the frame is occupied for verifying that there is only one timing master in a network.

In general the time count may be any time related counter value like time in milliseconds, microseconds or even a count of transmitted Bits, Bytes or network frames.

An inventive network node comprises a first communication port 11 which is configured to generate at least one frame 60 comprising at least
- a preamble 61 for marking the beginning of a frame,
- a data field 63 and
- a time count field 62.

The at least one frame 60 comprise a predetermined number of bits. Preferably the number of bits per frame is constant. Furthermore, the inventive network node comprises means for inserting timing information like a time counter 13 value in the time count field 62.

The inventive network node further comprises a second communication port 21 which receives data from the communication line. This communication port 21 preferably has a frame buffer and decoder 22 for storing frames and for disassembling the frames or at least parts thereof. When receiving data the second communication port 21 may first synchronize on a preamble 61, if available.

Furthermore, the inventive network node comprises means for comparing timing information from time count field 62 with the information of the last time count field, which has been transmitted or is still being transmitted. If both time count fields are not identical, there must be another timing master on the network and accordingly an arbitration mechanism is triggered to resolve this conflict.

In a preferred embodiment, a time counter 13 is provided for counting the generated frames 60. The bit value of the time counter 13 is segmented into a predetermined number n of segments preferably having a constant size of m bits. M may be any number, preferably between 4 and 16. M may be for example 8 or 16. Preferably the size of the time count field is also m bits. The individual segments are then inserted into the time count fields 62 of consecutive frames 60. Accordingly after n frames the complete time counter 13 has been packed into frames 60 and forwarded on the network. Preferably the frames 60 are of constant size. The n frames 16 containing the value of one time counter 13 are referred to as a set of n frames 81. Each set of n frames 81 contains a different time counter value. Accordingly the sets of n frames 81 are unique. These frames are assembled by the port. A separate framer may be included in the port. Subsequently to the assembly of the frame, by e.g. a framer, the frame is transmitted by the first communication port 11 via a transmission line 50.

The second communication port 21 according to the invention is configured for decoding the time count fields 62 of consecutive frames 60 and for reassembling the time counter value after receiving a set of n frames. For this purpose the second communication port 21 preferably has a receive time counter register 24, in which the values of the time count fields 62 of consecutive n frames 60 are transferred. After receiving a set of n frames 60 the second communication port 21 has received the full information on the time counter 13. Thus the receive time counter register 24 containing the last transmitted time counter value 13. This receive time counter register 24 represents a value corresponding to the time counter at transmit time. From this value the transmit time can be derived as the frames are of known size and known bit rate. The received time counter value is delayed against the transmitted time counter value for some time. Typically the delay of time is n frames in addition with some internal processing delay of the first and the second communication port and the propagation delay of the signals over the network. Such a delay may be added to the calculated time from the received time counter values to generate a precise real time reference. In most cases this should not be necessary. For a video transmission, for example a precise relative time reference may be sufficient, as the video signals travel over the network and are therefore delayed for the same amount of time as the time counter value signals in the time counter fields of frames.

In this embodiment, a set of n frames must be evaluated or compared to verify that the transmitted timing information is identical to the received timing information. Alternatively, the frame containing the least significant bits may be evaluated.

Preferably the first communication port has a stable clock 15 for generating the bits and a time counter 13 for counting the number of generated frames 60. This clock 15 may be synchronized to a reference like a crystal oscillator or an audio or video source. Preferably a PLL is used therein.

In addition to the time counter 13 value a time count checksum value may be contained in the time counter fields. Preferably such a time count checksum is contained preferably in the last of a set of n frames. This checksum is calculated over the time counter fields of a set of n frames 81 or a subset thereof. The second communication port 21 would only update its received time counter when a valid time count checksum has been received. In this case, the time count check sum may also be evaluated for identifying, whether there is a second timing master on the network.

In general the time counter 13 preferably counts frames 60, but it may also count other entities. Such entities may be bits or bytes transmitted onto the network. Even absolute or relative time intervals like seconds, milliseconds or microseconds may be counted. For this specific case, the time counter 13 counts individual bits, the size of the frames may vary.

The time counter 13 may be preset to any value. Specifically when starting up communication the time counter 13 may be set to zero or to a value representing the time of day, to any master time reference or to any other number like zero. It may also be preset during operation, for example when there is a significant difference to the actual time of day or to the master time reference.

Preferably the time counter 13 of the first communication port 11 is incremented just before the first segment of the counter value is assembled into a frame. Accordingly the time counter 13 is incremented each n frames and represents 1/n of the frames transmitted.

In a further embodiment the time counter 13 of the first communication port 11 is incremented n counts just before the first segment of the counter value is assembled into a frame and the assembly of a set of n frames starts. Accordingly the time counter 13 is incremented each n frames for n and represents the number of the frames transmitted. Between the individual frames of a set of n frames 81 the time counter 13 should not be incremented as this would scramble the value. If there is a time counter 13 which is incremented each frame 60, there should be a latch, the time counter register 14 which holds the counter value prior to assembly of the first counter value into a frame. The time counter register 14 value is then used for a set of n frames 81.

Preferably the time count fields 62 in the frames may contain parts of a binary or BCD encoded counter value.

Preferably the second communication port 21 has a stable local clock 25 for synchronizing its receiver on the bits transferred over the network. Preferably there is a PLL to synchronize a local oscillator to the bits transferred over the network. This local oscillator preferably has a higher frequency than the bit frequency.

In a further embodiment the network node generates at least one frame 60 having a unique network node ID. Such an ID may comprise a unique number. It must not be absolutely unique; it may also be a number having a high probability to be unique. For the very small probability of two network nodes as timing masters transmitting frames having the same value in the time count field, both nodes would receive what they transmit. Accordingly each node would be confident to be the sole timing master in the network. When the frames transmitted by these network nodes have additional unique IDs, each node could identify that a frame received was transmitted by a different node and therefore there is another timing master in the network. A suitable unique ID may be a 16 Bit value which may be part of the data field or the time count field. It may be a value which is programmed into the network node at production time. It may also be a value generated by a random number generator in the network node.

A communication system according to the invention comprises at least a pair of communication ports 11, 21 as described above. Preferably there are a higher number of communication ports 11, 21.

A bus node or network node 10, 20 according to the invention comprises at least a communication port 11 with the features of the first communication port 11 according to claim 1 and/or a second communication port 21 according to claim 2.

An inventive method for transmitting time count information over a communication system and for detecting at least a second timing master on the communication system comprises the steps as defined in independent claim 8.

Another example of the method for transmitting time count information over a communication system comprises the following steps:
- counting the number of transmitted frames,
- storing the number of transmitted frames,
- generating a set of n frames comprising at least
   ○ a preamble 61 for marking the beginning of a frame,
   ○ a data field 63 and
   ○ a time count field 62 containing only 1/n of the number of bits representing the stored number of transmitted frames, while n consecutive time count fields represent the stored number of transmitted frames;

Another example of the method for receiving time count information over a communication system comprises the following steps:
- receiving a set of n frames comprising at least
   ○ a preamble 61 for marking the beginning of a frame,
   ○ a data field 63 and
   ○ a time count field 62 containing only 1/n of the number of bits representing a stored number of transmitted frames, while n consecutive time count fields represent the stored number of transmitted frames;
- storing the time count fields of consecutive n frames,
- assembling of a received number of transmitted frames from the n received time count fields;

The invention allows easy resynchronization after a maximum of approximately 2*n frames, typically within 2*n-1 frames, even if time reference is completely lost or a port is connected to the network. If resynchronization has started just after the second frame of a set of n frames has been transmitted, the second port should wait until it can receive a full set of n frames starting with the first frame of this set. With an optimized recognition procedure the time for resynchronization may even reduced to n frames. In addition the overhead for transferring time and/or time count information is very low, as each frame contains only 1/n of the full time information. By the invention and extremely precise long time synchronization may be performed. On one hand long time synchronization may be achieved by transferring time counter values which may also contain time of day values with high resolution.

Such a high resolution also simplifies the detection of another timing master on the network, as the probability increases that different timing masters have different time references and therefore transfer different time informations over the network.

### Description of Drawings

In the following the invention will be described by way of example, without limitation of the general inventive concept, on examples of embodiment with reference to the drawings.
Figure 1 shows network nodes and a communication system according to the invention.
Figure 2 shows an exemplary data frame 60 according to the invention is shown.
Figure 3 shows a plurality of frames carrying time count information.
Figure 4 shows the assignment of time counter values to the time count fields of individual frames.

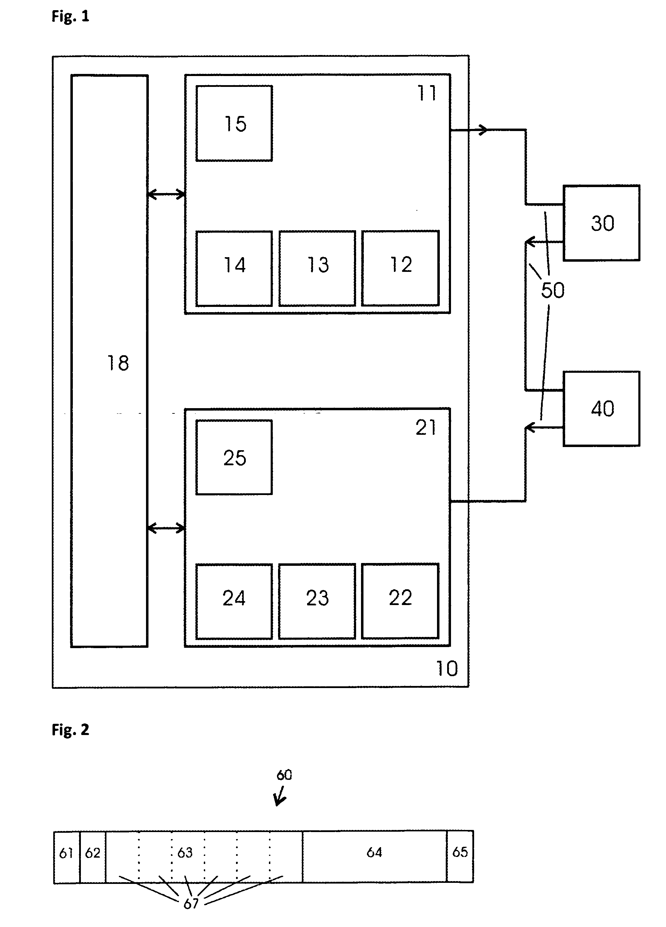

In figure 1 a preferred embodiment according to the invention is shown. A first network node 10, a second network node 30 and a third network node 40 are connected via network lines 50 to form a ring network. It is obvious, that there may be a different number of network nodes connected to the network. The minimum network comprises the first network node 10 and the second network node 30.

The first network node 10 has a first controller 18, which may host an application which is exchanging data with other network nodes 30, 40. The application may be a video source like a camera.

Furthermore the first network node 10 comprises a first communication port 11. This communication port 11 has a framer 12 for generating frames, clocked by the clock generator 15. Furthermore a time counter 13 for counting transmitted frames or other time information and a transmit time count register 14 for storing the value of the time counter 13 each n frames are provided. The framer 12 assembles frames comprising time count fields 62, wherein the time count field 62 in each frame 60 contains part of the information of the time counter 13 or the time count register 14.

The first network node further comprises a second communication port 21. This communication port 21 has a frame buffer and decoder for buffering and decoding received frames. It is clocked by a clock generator 25, which is preferably synchronized on the received frames or bits thereof. It may further be identical to the clock generator 15 of the first communication port. Furthermore a receive time counter 23 is provided for counting received frames. A receive time counter register 24 serves for assembling the time count information from n time count fields 62 received in successive frames 60.

The receive time count register 24 assembles the count information which has traveled over the network to nodes 30 and 40 and compares this value with the value of the transmit time count register 14. If both values are identical, there is no other timing master on a network. If both values are different, one of the network nodes may be another timing master on the network.

In figure 2 an exemplary data frame 60 according to the invention is shown. This frame 60 comprises the field preamble 61 which identifies the beginning of a frame and may contain additional synchronization bits. Furthermore it comprises a time count field 62 containing time count information derived from the time counter. This time count field 62 is only modified by a timing master. All other network nodes only may read the contents thereof. The fields 63 and 64 are used for transferring synchronous data and asynchronous data, which is also called the payload. The fields may be divided into bit groups 67. At the end of the frame 60 control bits 65 are transmitted. These bits may contain at least a checksum and additional information.

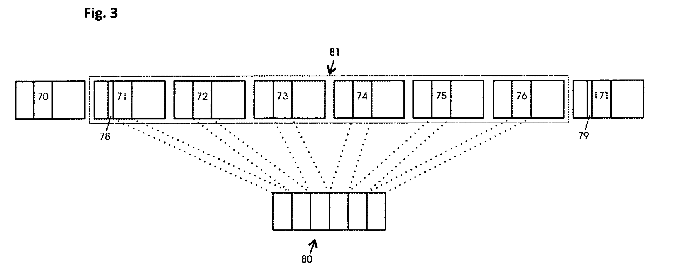

In figure 3 a sequence of frames according to the invention is shown. Within these frames the time count fields 70 - 77 contain time count information. Time count field 70 belongs to a first set of frames. The six time count fields 71 to 76 belong to a second set of frames. The time count field 171 belongs to a third set of frames. The beginning of the first set of frames is marked by the time count start identifier 78, which may be a coding violation, while the beginning of the second set of frames is marked by the time count start identifier 79. The values of the time count fields 71 to 76 are assembled together by a second communication port 21 into the receive time counter register 80, which represents the time counter value as transmitted by a first communication port 11.

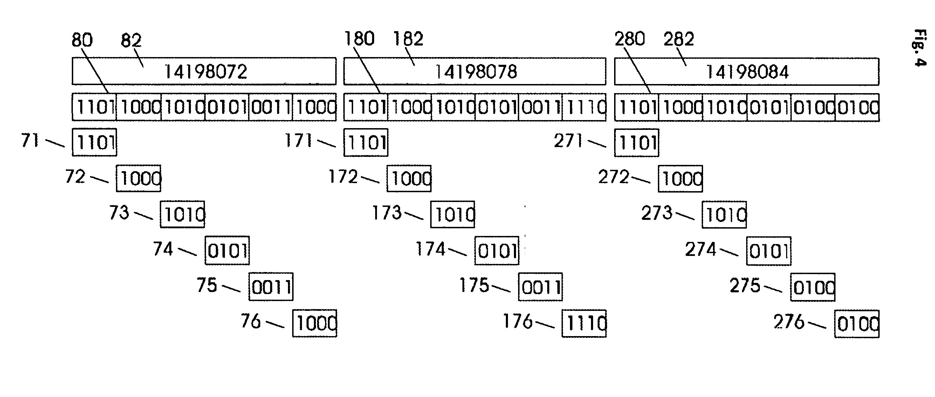

In figure 4 the assignment of time counter values to the time count fields of individual frames is shown in detail. In this example the time counter is shown in three different states. In the first state 82 before transmission of the second set of frames the time counter has a count of 14198072. Preferably this value is stored in memory. The binary representation of this number (1101 1000 1010 0101 0011 1000) is divided into n = 6 packets of four bits length and transmitted by means of the time count fields 71 - 76 of each frame to a receiver. The receiver successively receives these packets of four bits length and stores them into the receive time counter register 80. After a full set of frames (6 frames in this example) has been received, the contents of the receive time counter register is again the binary representation of the counter value of the time counter. Preferably means of frame synchronization like control bits are provided to indicate the first time count field of a set of frames. The receiver now has the same time counter value as the time counter value at the time starting the first frame of the second set of frames. From this time counter value real time information may be derived. To get precise time information, the delay caused by transmission of the full set of frames and the run time delay of the network components starting from the transmitter to the receiver may also be considered.

After the transmitter had transmitted the first set of frames, it increases the time counter in this example by the number of transmitted frames, which equals to six. Accordingly the new time counter value is 14198078. Again the binary representation of the time counter 182 value (1101 1000 1010 0101 0011 1110) is stored in memory and sent over the network as six individual time count fields 171 - 176 of the third set of frames. These are again received by the receiver and assembled to the value in the receive time counter register 180. The same applies to the fourth set of frames, starting with the next time counter value 282, which is again increased by 6. It is obvious, that this counter can be increased by any predetermined value. Again the binary representation of this counter value is stored in memory and sent over the network at six individual time count fields 271 - 276, which are again reassembled by a receiver into the receive time counter register 280.

Instead of using control bits for identifying the first time count field of a set of frames, the receiver may compare the bit groups of time count fields of individual frames. In a first step the time count fields of frames being n frames distant from each other are compared. N is the number of frames in a set of frames. It is now assumed that n is less than ( 2^m) - the maximum number of states which can be represented by a time count field of m bits per frame. In our example with a four bit time count field the maximum number of states is 16. Accordingly n is less than 16. Now between time count fields being n frames apart, which is six frames apart in our example, the least significant time count fields 76, 176, 276 change their values. In the second set of frames the least significant time count field 17 six has the value 1000. The third time count field 176, being six frames apart has the value 1110 and the fourth time count field 276 being another six frames apart has the value 0100. In contrast thereto the higher order time count fields, specifically the most significant time count fields 71, 171, 271 being also six frames apart remain unchanged. The receiver may now start assembling the time count fields into the time count register starting with a most significant time count field 171 with unchanged bits over the time count of field 71 and with a least significant time count field a 176 with changed bits over the time count field 76. In some cases not only the bits of the least significant time count field changes, but also bits of higher significance time count bits change as the time count field 275 in our example. The described method still works in this case. For the rare case, that 6 successive time count fields change, the set of time count fields is skipped and the same method is repeated with the next 6 time count fields.

For the case that that n is equal or greater than ( 2^m ), the least significant time count fields may not change. If for example 16 frames would belong to a group of frames, the bits of the 15th frame would change and the bits of the 16th frame would remain unchanged. This has to be considered by assembling the frames into the receive time counter register.

### List of reference numerals

- 10: first network node
- 11: first communication port
- 12: framer
- 13: time counter
- 14: transmit time count register
- 15: clock generator
- 18: first application
- 21: second communication port
- 22: frame buffer and decoder
- 23: receive time counter
- 24: receive time counter register
- 25: clock generator
- 28: second application
- 30: second network node
- 40: third network node
- 50: network lines
- 60: data frame
- 61: preamble
- 62: time count field
- 63: synchronous data
- 64: asynchronous data
- 65: control bits
- 67: bit groups
- 70: last time count field of first set of frames
- 71 - 76: time count fields of second set of frames
- 78: time count start identifier of second frame
- 79: time count start identifier of third frame
- 80: receive time counter register
- 81: set of n frames
- 82: time counter
- 171-176: time count fields of third set of frames
- 180: receive time counter register
- 182: time counter
- 271 - 276: time count fields of fourth set of frames
- 280: receive time counter register
- 282: time counter

## Claims

1. A network node of a ring bus network acting as timing master, comprising:
a first communication port (11), being configured to generate at least one frame (60),
the at least one frame having at least
- a preamble (61),
- a data field (63),
- a time count field (62) representing the time information from a time counter (13),
a second communication port (21) for receiving said at least one frame (60),
**characterized by** means (24) adapted to compare the received time count field with the time count field generated by the first communication port and to signal the presence of at least another timing master if the compared time count fields are not equal, and
wherein the propagation delay of a frame traveling around the ring bus is less than the length of said frame, so that the second communication port is receiving at least parts of said frame while the first communication port is transmitting said frame.

2. A network node according to claim 1,
**characterized by**
the time counter (13) being adapted to count one of frames, bytes, bits, transported video frames or time intervals.

3. A network node according to any one of the preceding claims,
**characterized by**
the bit value of the time counter (13) being divided into a predetermined number of n segments and being placed in the time count field (62) of n consecutive frames.

4. A network node according to any one of the preceding claims,
**characterized by**
a second communication port (21), being configured for reassembling the value of a time counter (13) by evaluating the time count field (62) of n consecutive frames.

5. A network node according to any one of the preceding claims,
**characterized by**
a stable clock (15) for generating the frames, which may be synchronized to a reference like a crystal oscillator or an audio or video source.

6. A network node according to any one of the preceding claims,
**characterized by**
at least one of a set of n generated frames (81) containing a time count checksum for the time count fields (62).

7. A network node according to claim 1,
**characterized by**
at least one of a set of n generated frames (81) containing a unique ID value.

8. A method for detecting multiple timing masters on a ring bus by a network node having a first and a second communication port comprising the steps:
- generating time information by counting time, bits, bytes or the number of transmitted frames,
- generating at least one frame, by a first communication port (11), each frame comprising at least
○ a preamble (61) for marking the beginning of a frame,
○ a data field (63) and
○ a time count field(62)representing the counted time information;
- transmitting the at least one frame on the communication system,
- receiving the at least one frame by a second communication port (21) after passing the ring bus wherein the propagation delay of a frame traveling around the ring bus is less than the length of said frame, so that the second communication port is receiving at least parts of said frame while the first communication port is transmitting said frame,
the method being **characterized by**
- comparing the received time count field with the transmitted time count field and signaling the presence of at least another timing master, if the compared time count fields are not equal.

9. A method according to claim 8,
**characterized by**
generating frames with a time count field containing only 1/n of the number of bits representing the counted time information, while n consecutive time count fields represent the counted time information, and assembling of a received number of a time counter from the n received time count fields.

## Patentansprüche

1. Netzwerkknoten eines Ringbus-Netzwerks, welcher als Zeitgeber wirkt, umfassend:
einen ersten Kommunikationsanschluss (11), der dazu ausgelegt ist, mindestens einen Datenübertragungsblock (60) zu erzeugen,
wobei der mindestens eine Datenübertragungsblock mindestens folgendes aufweist:
- eine Präambel (61),
- ein Datenfeld (63),
- ein Zeitzählfeld (62), welches die Zeitinformation eines Zeitzählers (13) darstellt,
einen zweiten Kommunikationsanschluss (21) zum Empfangen des mindestens einen Datenübertragungsblocks (60),
**gekennzeichnet durch**
Mittel (24), die dazu ausgelegt sind, das empfangene Zeitzählfeld mit dem vom ersten Kommunikationsanschluss erzeugten Zeitzählfeld zu vergleichen und das Vorhandensein mindestens eines anderen Zeitgebers zu Signalisieren, falls die verglichenen Zeitzählfelder einander nicht gleich sind, und
wobei die Laufzeitverzögerung eines um den Ringbus laufenden Datenübertragungsblocks kleiner ist als die Länge des Datenübertragungsblocks, so dass der zweite Kommunikationsanschluss mindestens Teile des Datenübertragungsblocks empfängt, während der erste Kommunikationsanschluss den Datenübertragungsblock überträgt.

2. Netzwerkknoten nach Anspruch 1,
**dadurch gekennzeichnet, dass**
der Zeitzähler (13) dazu ausgelegt ist, Datenübertragungsblöcke, Bytes, Bits, übertragene Videodatenübertragungsblöcke oder Zeitintervalle zu zählen.

3. Netzwerkknoten nach einem der vorhergehenden Ansprüche,
**dadurch gekennzeichnet, dass**
der Bitwert des Zeitzählers (13) in eine vorbestimmte Anzahl von n Segmenten unterteilt und in das Zeitzählfeld (62) von n aufeinander folgenden Datenübertragungsblöcken platziert ist.

4. Netzwerkknoten nach einem der vorhergehenden Ansprüche,
**gekennzeichnet durch**
einen zweiten Kommunikationsanschluss (21), der dazu ausgelegt ist, den Zählwert eines Zeitzählers (13) **durch** Auswerten des Zeitzählfeldes (62) von n aufeinanderfolgenden Datenübertragungsblöcken zusammenzustellen.

5. Netzwerkknoten nach einem der vorhergehenden Ansprüche,
**gekennzeichnet durch**
einen stabilen Takt (15) zum Erzeugen der Datenübertragungsblöcke, welcher unter einer Bezugnahme wie auf einen Kristalloszillator oder eine Audio- oder Videoquelle synchronisiert sein kann.

6. Netzwerkknoten nach einem der vorhergehenden Ansprüche,
**dadurch gekennzeichnet, dass**
mindestens einer aus einem Satz von n erzeugten Datenübertragungsblöcken (81) eine Zeitzählungs-Checksumme für die Zeitzählfelder (62) enthält.

7. Netzwerkknoten nach Anspruch 1,
**dadurch gekennzeichnet, dass**
mindestens einer aus einem Satz von n erzeugten Datenübertragungsblöcken (81) einen einmaligen ID-Wert enthält.

8. Verfahren zum Erfassen von mehreren Zeitgebern auf einem Ringbus durch einen Netzwerkknoten, welcher einen ersten und einen zweiten Kommunikationsanschluss aufweist, umfassend die folgenden Schritte:
- das Erzeugen von Zeitinformation durch Zählung von Zeit, Bits, Bytes oder der Anzahl von übertragenen Datenübertragungsblöcken,
- das Erzeugen von mindestens einem Datenübertragungsblock durch einen ersten Kommunikationsanschluss (11), wobei jeder Datenübertragungsblock mindestens folgerndes umfasst:
○ eine Präambel (61) zur Kennzeichnung des Anfangs eines Datenübertragungsblocks,
○ ein Datenfeld (63) und
○ ein Zeitzählungsfeld (62), welches die gezählte Zeitinformation darstellt,
- das Übertragen des mindestens einen Datenübertragungsblocks auf dem Kommunikationssystem,
- das Empfangen des mindestens einen Datenübertragungsblocks durch einen zweiten Kommunikationsanschluss (21) nach dem Passieren des Ringbusses, wobei die Laufzeitverzögerung eines um den Ringbus laufenden Datenübertragungsblocks kleiner ist als die Länge des Datenübertragungsblocks, so dass der zweite Kommunikationsanschluss mindestens Teile des Datenübertragungsblocks erhält, während der erste Kommunikationsanschluss den Datenübertragungsblock überträgt,
wobei das Verfahren **gekennzeichnet ist durch**
- das Vergleichen des empfangenen Zeitzählungsfeldes mit dem übertragenen Zeitzählungsfeld und das Signalisieren der Gegenwart von mindestens einem anderen Zeitgeber, falls die verglichenen Zeitzählungsfelder nicht gleich sind.

9. Verfahren nach Anspruch 8,
**gekennzeichnet durch**
das Erzeugen von Datenübertragungsblöcken mit einem Zeitzählfeld welches nur 1/n der Anzahl an Bits enthält, welche die gezählte Zeitinformation darstellen, während n aufeinander folgende Zeitzählfelder die gezählte Zeitinformation darstellen, und
das Zusammenstellen einer von einem Zeitzähler empfangenen Anzahl aus den n empfangenen Zeitzählfeldern.

## Revendications

1. Un noeud de réseau d'un réseau de bus en anneau servant de maître de temps, comprenant :
un premier port de communication (11), étant configuré pour générer au moins un bloc de données (60),
ce bloc de données ayant au moins
- un préambule (61),
- un champ de données (63),
- un champ de comptage de temps (62) représentant les informations de
temps à partir d'un compteur de temps (13),
un deuxième port de communication (21) pour recevoir au moins un bloc de données (60),
**caractérisé par**
un moyen (24) adapté pour comparer le champ de comptage de temps reçu au champ de comptage de temps généré par le premier port de communication et pour signaler la présence d'au moins un autre maître de temps si les champs de comptage de temps comparés ne sont pas égaux et
où le délai de propagation d'un bloc de données se déplaçant autour du bus en anneau est inférieur à la longueur de ledit bloc de données, de sorte que le deuxième port de communication reçoive au moins des parties de ce bloc de données alors que le premier port de communication transmet ledit bloc de données.

2. Un noeud de réseau selon la revendication 1,
**caractérisé par**
le compteur de temps (13) étant adapté pour compter une des blocs de données, octets, bits, blocs de données vidéo transportées ou intervalles de temps.

3. Un noeud de réseau selon l'une des revendications précédentes,
**caractérisé par**
la valeur en bit du compteur de temps (13) étant divisée en un nombre prédéterminé de segments n et étant placée dans le champ de comptage de temps (62) de n blocs de données consécutives.

4. Un noeud de réseau selon l'une des revendications précédentes,
**caractérisé par**
un deuxième port de communication (21), étant configuré pour rassembler la valeur d'un compteur de temps (13) en évaluant le champ de comptage de temps (62) de n blocs de données consécutives.

5. Un noeud de réseau selon l'une des revendications précédentes,
**caractérisé par**
une horloge stable (15) pour générer les blocs de données, qui peut être synchronisée avec une référence comme oscillateur à cristal ou une source audio ou vidéo.

6. Un noeud de réseau selon l'une des revendications précédentes,
**caractérisé par**
au moins un ensemble de n blocs de données générées (81) contenant une somme de contrôle de comptage de temps pour les champs de comptage de temps (62).

7. Un noeud de réseau selon la revendication 1,
**caractérisé par**
au moins un ensemble de n blocs de données générées (81) contenant une valeur ID unique.

8. Une méthode pour détecter de multiples maîtres de temps sur un bus à anneau par un noeud de réseau ayant un premier et un deuxième port de communication comprenant les étapes de :
- génération d'informations de temps en comptant le temps, les bits, les octets ou le nombre des blocs de données transmises,
- génération d'au moins un bloc de données, par un premier port de communication (11), chaque bloc de données comprenant au moins
○ un préambule (61) pour marquer le début d'un bloc de données,
○ un champ de données (63) et
○ un champ de comptage de temps (62) représentant les informations de temps comptées ;
- transmission d'au moins un bloc de données sur le système de communication
- réception d'au moins un bloc de données par un deuxième port de communication (21) après avoir passé le bus en anneau où le délai de propagation d'un bloc de données se déplaçant autour du bus en anneau est inférieur à la longueur de ledit bloc de données, de sorte que le deuxième port de communication reçoive au moins des parties de ledit bloc de données alors que le premier port de communication transmet ledit bloc de données,
la méthode étant **caractérisée par**
- la comparaison du champ de comptage de temps reçu et du champ de comptage de temps transmis,
- et le signalement de la présence d'au moins un autre maître de temps, si les champs de comptage de temps comparés ne sont pas égaux.

9. Une méthode selon la revendication 8,
**caractérisée par**
la génération de bloc de données avec un champ de comptage de temps contenant uniquement 1/n du nombre de bits représentant les informations de temps comptées, alors que n champs de comptage de temps consécutif représentent les informations de temps comptées, et
l'assemblage d'un nombre reçu d'un compteur de temps à partir des champs de comptage de temps reçus.
